# EUROPÄISCHE PATENTSCHRIFT

(11) **EP 0 925 591 B1**
(45) Veröffentlichungstag und Bekanntmachung des Hinweises auf die Patenterteilung: **05.07.2006**
(21) Anmeldenummer: 97918914.9
(22) Anmeldetag: 21.08.1997
(51) Int. Cl.: H01B 19/00, G02B 6/44

(54) **VERFAHREN ZUR HERSTELLUNG EINES GEWICKELTEN ISOLIERROHRES II**
METHOD OF PRODUCING A WOUND INSULATING PIPE
PROCEDE DE PRODUCTION D'UN TUBE ISOLANT ENROULE

(30) Priorität: 21.08.1996 DE 19635372
(43) Veröffentlichungstag der Anmeldung: 30.06.1999
(73) Patentinhaber: SIEMENS AKTIENGESELLSCHAFT, 80333 München (DE); Maschinenfabrik Reinhausen GmbH, 93059 Regensburg (DE)
(72) Erfinder: SCHULER, Klaus, D-13589 Berlin (DE); LORENZ, Dieter, D-12207 Berlin (DE); GROSS, Walther, D-91074 Herzogenaurich (DE); HAIN, Stefan, D-91090 Effeltrich (DE); LESSMANN-MIESKE, Hans-Henning, D-93073 Neutraubling (DE); SCHMUCK, Hans, D-93053 Regensburg (DE); STENZEL, Karl, D-93180 Deuerling (DE)
(74) Vertreter: Berg, Peter
(86) Internationale Anmeldenummer: PCT/DE1997/001867
(87) Internationale Veröffentlichungsnummer: WO 1998/008229

(56) Entgegenhaltungen:
- EP-A- 0 146 845
- EP-A- 0 265 737
- EP-A- 0 720 181
- WO-A-94/06127
- DE-A- 2 755 734
- DE-A- 2 901 872
- DE-A- 3 815 717
- DE-A- 3 921 442
- FR-A- 2 725 302
- US-A- 3 485 940
- US-A- 4 610 033
- PATENT ABSTRACTS OF JAPAN vol. 007, no. 214 (E-199), 21.September 1983 & JP 58 107037 A (TOKYO SHIBAURA DENKI KK), 25.Juni 1983,

## Beschreibung

Die Erfindung betrifft ein Verfahren zur Herstellung eines gewickelten Isolierrohres, insbesondere für einen Hochspannungsisolator, mit mindestens einem Kanal für nachträglich einziehbare Leiter, Lichtwellenleiter oder dergleichen.

Isolierrohre und Hochspannungs-Isolatoren mit integriertem Leiter, insbesondere Lichtwellenleiter, nachfolgend als LWL bezeichnet, sind in vielfältigen Ausführungsformen bekannt. Die EP 0 265 737 beschreibt eine solche Anordnung, wobei der LWL spiralförmig längs eines Lichtleiterträgers geführt ist; der Lichtleiterträger wiederum ist als isolierende Wendel ausgebildet, die sich im Hohlraum des Hochspannungs-Isolators befindet.

Eine weitere gattungsgemäße Anordnung ist aus der US 3,485,940 bekannt, dort ist ein LWL von einem Polyesterrohr umgeben, das in Längsrichtung durch den Strunk des Isolators geführt ist.

Die EP 0 146 845 beschreibt einen weiteren gattungsgemäßen Hochspannungs-Isolator, wobei der Lichtleiter in einer zwischen Strunk und Schirmkörpern angeordneten Zwischenschicht in einer Rille ebenfalls längs durch den Isolator geführt ist.

Bei den beschriebenen Hochspannungs-Isolatoren wird der LWL üblicherweise nachträglich in den vorgefertigten Isolator bzw. das Isolierrohr eingezogen. Aus der DE 27 55 734 ist es dazu bekannt, Längsnuten vorzusehen, die Kanäle bilden und die Lichtleitfasern aufnehmen und anschließend diese Kanäle zu schließen. In ähnlicher Weise ist es aus der FR 2 725 302 dazu bekannt, in der Wand des Isolators eine Rille in Form einer Spirale vorzusehen und in diese Rille ein stranggepreßtes, fortlaufendes Band aus Elastomer einzubringen. Danach wird der LWL auf die obere Seite dieses Bandes gelegt und dann drückt man, z. B. durch Rollen, den optischen Wellenleiter und das Band zusammen, um es in den Boden der Rille einzulegen und in das Elastomermaterial einzubetten.

Aus der DE 29 01 872 ist es bekannt, einen LWL in einer in Längsrichtung verlaufenden Zwischenschicht vorzusehen, die Ausleitung aus dieser Zwischenschicht erfolgt durch Bohrungen.

Aus dem Patent Abstract of Japan Vol. 007 Nr. 214 (E.199) vom 21.09.1983; Publication Number JP 58107037 (25.06.1983), ist bekannt, auf spulenförmigen Körpern einen gewebten oder ungewebten Stoff, Glasfasern usw., die mit einem Kunststoff imprägniert sind, zu umwickeln.

Aus der DE 39 21 442 ist auch bereits bekannt, Leerkabel zum nachträglichen Einziehen von optischen Fasern vorzusehen, die eine Einziehhilfe für das nachträgliche Einziehen eben dieser Fasern, d. h. LWL, aufweisen.

Ein bekanntes Verfahren zur Herstellung von Hochspannungs-Isolatoren ist das Wickeln von Isolierrohren aus Epoxidharzen mit Laminataufbau aus Glasfasern oder synthetischen Fasern. Solche Isolierrohre sind aus der Firmenschrift "MR-Isolierrohre ROTAFIL® für die Hochspannungstechnik", Impressum VK23-0/88de, bekannt. Bei diesen Wickelverfahren ist das Einwickeln von Leerrohren nicht ohne weiteres möglich, da sich seitlich des eingewickelten Leerrohres luftgefüllte Zwickel ergeben, die die dielektrischen und die elektrischen Eigenschaften negativ beeinflussen.

Aufgabe der Erfindung ist es demnach, ein geeignetes Verfahren zur Herstellung eines gewickelten Isolierrohres mit mindestens einem integrierten Kanal zum nachträglichen Einziehen mindestens eines LWL anzugeben, wobei der gesamte Querschnitt des solcherart hergestellten Isolierrohres von Material ausgefüllt sein soll, d. h. sich keine luftgefüllte Zwickel im Bereich des mindestens einen integrierten Kanales befinden sollen.

Weiterhin soll die Kontur nur unwesentlich von der Kreisform abweichen.

Diese Aufgabe wird durch ein Verfahren mit den Merkmalen des ersten Patentanspruches gelöst.

Die Unteransprüche betreffen besonders vorteilhafte Weiterbildungen der Erfindung.

Der besondere Vorteil des erfindungsgemäßen Verfahrens besteht darin, daß durch das Einwickeln eines Formkörpers, der aus mindestens einem Leerrohr und seitlichen, gekrümmten oder flexiblen Ansätzen besteht, sichergestellt ist, daß sich keine Hohlräume, d. h. Lufteinschlüsse, beim wickeln bilden können, die sich nachteilig auf die dielektrischen bzw. elektrischen Eigenschaften auswirken würden. Dabei ist es möglich, die seitlichen Ansätze des Formkörpers von vornherein mit einer Krümmung auszubilden, die, wie noch erläutert werden wird, an die Krümmung der Oberfläche des jeweiligen Isolierrohres, auf der der Formkörper befestigt wird, angepaßt ist; in einem solchen Fall wird durch die angepaßten Krümmungen ein Einwickeln ohne Hohlräume erznbglicht.

Es ist auch möglich, die seitlichen Ansätze des Formkörpers flexibel zu gestalten, so daß sie sich beliebigen Krümmungen der Oberfläche, auf der sie befestigt werden, anpassen können und beim Einwickeln ebenfalls Hohlräume vermieden werden.

Die Erfindung soll nachfolgend an einem Ausführungsbeispiel noch näher erläutert werden. Die Figuren zeigen:

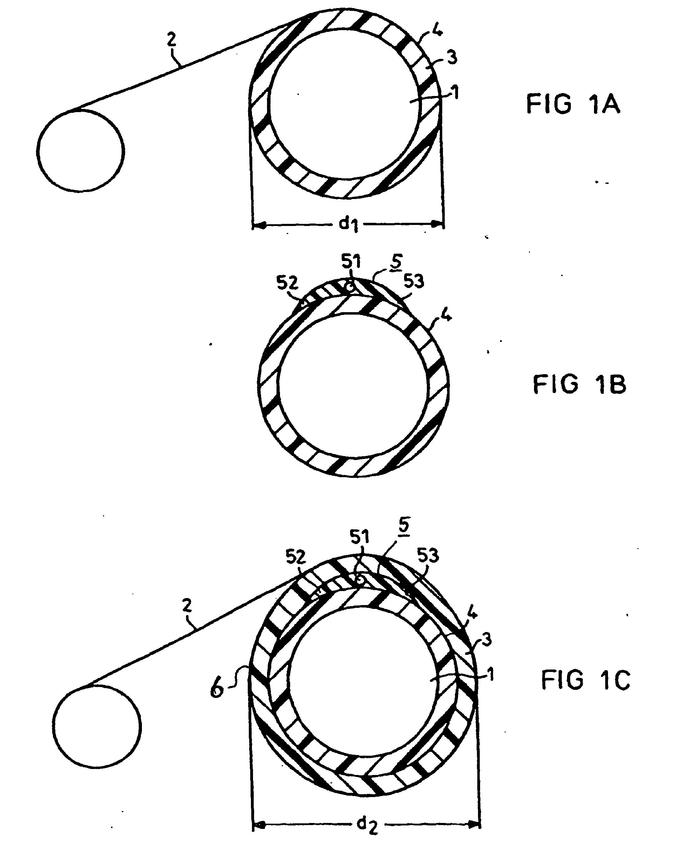

Fig. 1A) bis C) drei unterschiedliche Phasen des erfindungsgemäßen Verfahrens bei der Herstellung eines Isolierrohres,
Fig. 2 einen ersten geeigneten Formkörper,
Fig. 3 einen zweiten geeigneten Formkörper.

Die wesentlichen Verfahrensschritte sind folgende:
A) Auf einen Wickeldorn 1 einer an sich bekannten Wickelmaschine werden erste Lagen 3 des aufzuwickelnden Materials 2, beispielsweise von Rovings, eines Bandes oder von Fäden, bis zu einer bestimmten Dicke d₁ aufgewickelt und mit Harz getränkt. Anschließend werden diese ersten Lagen 3 auf bekannte weise zumindest weitestgehend ausgehärtet. Auf diese Weise entsteht ein Laminataufbau; besonders vorteilhaft ist es, als Harz Epoxidharz einzusetzen und als aufzuwickelndes Material Glas- oder synthetische Fasern, Polyesterfasern etwa, vorzusehen.
   Es ist auch ein sog. Mischlaminataufbau möglich, wobei beispielsweise innenliegend, d. h. direkt auf dem Wickeldorn, ein Polyestervlies vorgesehen wird, auf den das aufzuwikkelnde Material, z. B. Glasfasern, aufgebracht wird.
B) Auf die entstandene Oberfläche 4 wird ein Formkörper 5 aufgelegt und fixiert. Der Formkörper 5 weist ein Leerrohr 51 und seitlich davon gekrümmte Ansätze 52, 53 aus Isolierstoff auf, die sich in Längsrichtung über die gesamte Länge des Leerrohres 51 erstrecken. Die untere Krümmung des Formkörpers ist an die Kriurunung der Oberfläche 4, die nach Erreichen der Dicke d₁ entstanden ist, angepaßt. Es ist, wenn die gekrümm-ten Ansätze 52,53 flexibel ausgeführt sind, zudem möglich, daß sie sich beim Weiterwickeln selbständig an die Krümmung der Oberfläche 4 anlegen.
C) Anschließend wird weitergewickelt, d. h. es werden weitere Lagen 6 des Materiales 2 aufgewickelt, bis der Enddurchmesser d₂ des Isolierrohres erreicht ist.

Dabei ist, wie bereits erwähnt, auch ein Mischlaminataufbau möglich, wobei nacheinander unterschiedliche Materialien aufgewickelt werden, so daß die ersten Lagen 3 und die weiteren Lagen 6 sowohl allein betrachtet als auch untereinander aus unterschiedlichen Werkstoffen bestehen können. Beispielsweise ist es möglich, auf eine Schicht aus Glasfasern noch eine Deckschicht aus Polyesterfasern aufzuwickeln.

Besonders vorteilhaft ist es, den gesamten Formkörper 5 aus flexiblem Isolierstoff herzustellen; damit ist es auch möglich, den Formkörper spiralförmig auf die erste Oberfläche 4 aufzubringen.

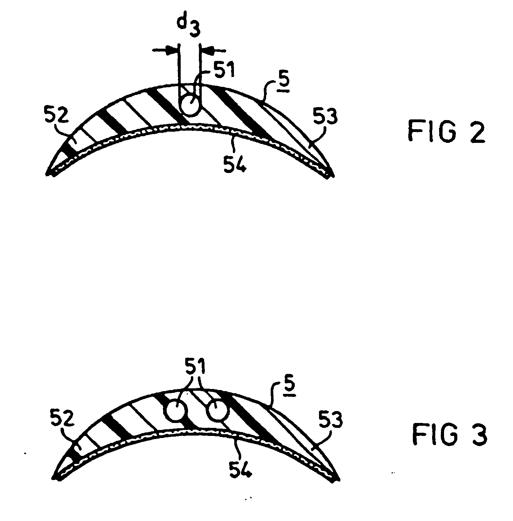

Die Fixierung des Formkörpers auf dieser Oberfläche 4 kann beispielsweise durch eine selbstklebende Beschichtung 54 auf der Unterseite erfolgen, so wie dies in den Figuren 2 und 3 dargestellt ist, die unterschiedliche Formkörper 5 zeigen.
Es ist durchaus möglich, endlose Formkörperstränge vorgefertigt auf einer Rolle vorzuhalten, die dann nach Bedarf erst beim Aufbringen auf das vorgewickelte Isolierrohr konfektioniert werden.

In vielen Fallen wird es vorteilhaft sein, vor dem Weiterwikkeln die Oberfläche 4 vorzubehandeln, um die Haftung der nachfolgend aufzuwickelnden Lagen 6 auf dieser Oberfläche zu verbessern. Diese Vorbehandlung kann sowohl mechanisch, z. B. durch Aufrauhen, als auch chemisch, z. B. durch eine Primärbehandlung, erfolgen.

Isolierrohre haben für die meisten industriellen Anwendungsfälle einen Gesamtdurchmesser von etwa 100 ... 1000 mm. Wenn man berücksichtigt, daß in den Kanal nachträglich einzuziehende Kabel oder LWL in der Regel nur einige mm dick sind, wird in den meisten Fallen der Durchmesser d₃ des Leerrohres und damit die gesamte Höhe des Formkörpers 5 ebenfalls nur eine Dicke in dieser Größenordnung aufweisen. Die Abweichung der Querschnittes des fertigen Isolierrohres von der Kreisform ist also gering und wird für viele Anwendungsfälle überhaupt nicht stören. Es ist außerdem ohne weiteres möglich, beispielsweise an den Enden, anschließend die äußere Oberfläche einer Bearbeitung zu unterziehen, um eine exakte Kreisform herzustellen.

## Patentansprüche

1. Verfahren zur Herstellung eines gewickelten Isolierrohres, insbesondere für einen Hochspannungsisolator, mit mindestens einem Kanal für nachträglich einziehbare Leiter, Lichtwellenleiter oder dergleichen, mit folgenden Verfahrensschritten:
- auf einen Wickeldorn (1) werden erste Lagen (3) eines aufzuwickelnden Materials (2), insbesondere von Rovings, eines Bandes oder von Fäden aus Glas oder synthetischem Material, bis zu einem bestimmten Durchmesser (d₁) aufgewickelt und mit Harz getränkt, derart, daß eine Armierung entsteht,
- auf die entstandene Oberfläche (4) wird ein Formkörper (5) aufgelegt und fixiert, der Formkörper (5) weist mindestens ein einen Kanal bildendes Leerrohr (51) und seitlich davon Ansätze (52,53) auf, die sich in Längsrichtung über die gesamte Länge des mindestens einen Leerrohres (51) erstrecken,
- anschließend werden weitere Lagen (6) eines aufzuwickelnden Materials (2) aufgewickelt, bis der Enddurchmesser (d₂) des Isolierrohres erreicht ist.

2. Verfahren nach Patentanspruch 1,
**dadurch gekennzeichnet, daß**,
vor dem Aufwickeln weiterer Lagen (6) die Oberfläche (4) mechanisch und/oder chemisch vorbehandelt wird.

3. Verfahren nach Patentanspruch 1 oder 2,
**dadurch gekennzeichnet, daß**,
die untere Krümmung der Ansätze (52, 53) so gewählt wird, daß sie mit der Krümmung der Oberfläche (4) korrespondiert.

4. Verfahren nach einem der vorangehenden Patentansprüche,
**dadurch gekennzeichnet, daß**,
die Ansätze (52, 53) aus flexiblem Material bestehen, derart, daß sie beim Wickeln der weiteren Lagen (6) fest auf die Oberfläche (4) gedrückt werden.

## Claims

1. Method for producing a wound insulating tube, in particular for a high-voltage insulator, with at least one channel for conductors, optical waveguides or the like that can subsequently be drawn in, comprising the following method steps:
- first layers (3) of a material (2) to be wound on, in particular of rovings, a ribbon of glass or filaments of glass or synthetic material, are wound onto a winding mandrel (1) until a specific diameter (d₁) is achieved, and impregnated with resin in such a way that a sheathing is created,
- a moulded body (5) is placed onto the surface (4) created and is fixed, the moulded body (5) has at least one empty tube (51), forming a channel, and laterally in relation to the latter projections (52, 53) which extend in the longitudinal direction over the entire length of the at least one empty tube (51),
- subsequently, further layers (6) of a material (2) to be wound on are wound on until the final diameter (d₂) of the insulating tube is achieved.

2. Method according to Patent Claim 1, **characterized in that**, before further layers (6) are wound on, the surface (4) is mechanically and or chemically pretreated.

3. Method according to Patent Claim 1 or 2, **characterized in that** the lower curvature of the projections (52, 53) is chosen such that it corresponds to the curvature of the surface (4).

4. Method according to one of the preceding patent claims, **characterized in that** the projections (52, 53) consist of flexible material in such a way that they are firmly pressed onto the surface (4) during the winding of the further layers (6).

## Revendications

1. Procédé de production d'un tube isolant enroulé, notamment pour un isolateur à haute tension, comprenant au moins un canal pour des conducteurs, des guides d'ondes lumineuses ou analogues à introduire ensuite, comprenant les stades suivants:
- on enroule sur un mandrin (1) d'enroulement des premières strates (3) d'une matière (2) à enrouler, notamment de roving, d'une bande ou de fils de verre ou d'une matière synthétique, jusqu'à un diamètre (d₁) déterminé et on les imprègne de résine de façon à former une armure,
- sur la surface (4) créée, on applique et on immobilise un corps (5) de forme, le corps (5) de forme ayant au moins un tube (51) vide formant un canal et, latéralement à celui-ci, des prolongements (52, 53), qui s'étendent, dans la direction longitudinale, sur toute la longueur du au moins un tube (51) vide,
- on enroule ensuite des strates (6) supplémentaires, d'une autre matière (2) à enrouler, jusqu'à atteindre le diamètre (d₂) final du tube isolant.

2. Procédé suivant la revendication 1, **caractérisé en ce qu'**avant d'enrouler des strates (6) supplémentaires, on fait subir à la surface (4) un traitement préalable mécanique et/ou chimique.

3. Procédé suivant la revendication 1 ou 2, **caractérisé en ce qu'**on choisit la courbure inférieure des prolongements (52, 53) de façon à ce qu'elle corresponde à la courbure de la surface (4).

4. Procédé suivant l'une des revendications précédentes, **caractérisé en ce que** les prolongements (52, 53) sont en une matière souple de sorte qu'ils sont repoussés fermement sur la surface (4), lors de l'enroulement des strates (6) supplémentaires.
